# EUROPÄISCHE PATENTSCHRIFT

(11) **EP 1 753 940 B1**
(45) Veröffentlichungstag und Bekanntmachung des Hinweises auf die Patenterteilung: **22.08.2007**
(21) Anmeldenummer: 05756813.1
(22) Anmeldetag: 07.06.2005
(51) Int. Cl.: F01K 23/00

(54) **VERFAHREN ZUM BETRIEB EINER KRAFTWERKSANLAGE, UND KRAFTWERKSANLAGE**
METHOD FOR OPERATING A POWER PLANT AND POWER PLANT
PROCEDE POUR EXPLOITER UNE CENTRALE ELECTRIQUE ET CENTRALE ELECTRIQUE

(30) Priorität: 11.06.2004 DE 102004028531
(43) Veröffentlichungstag der Anmeldung: 21.02.2007
(73) Patentinhaber: Alstom Technology Ltd, 5400 Baden (CH)
(72) Erfinder: ALTHAUS, Rolf, CH-8704 Herrliberg (CH)
(86) Internationale Anmeldenummer: PCT/EP2005/052595
(87) Internationale Veröffentlichungsnummer: WO 2005/121510

(56) Entgegenhaltungen:
- DE-A1- 4 410 440
- DE-A1- 10 064 263
- US-A1- 2003 167 773
- US-A1- 2004 065 089

## Beschreibung

### Technisches Gebiet

Die vorliegende Erfindung bezieht sich auf ein Verfahren zum Betrieb einer Kraftwerksanlage gemäss dem Oberbegriff des Anspruchs 1. Die Erfindung bezieht sich weiterhin auf eine Kraftwerksanlage zur Durchführung des erfindungsgemässen Verfahrens. Ein derartiges Verfahren und eine derartige Kraftwerksanlage sind aus DE 100 64 263 bekannt.

### Stand der Technik

Es ist bekannt, den Abgastrakt von Gasturbinen oder Gasturbogruppen nach einem Stillstand vor der Beaufschlagung mit Rauchgasen mit Frischluft zu spülen. Damit wird vermieden, dass sich brennbare Gase, die sich während längerer Stillstandsphasen potenziell ansammeln können, bei der Inbetriebnahme entzünden. Die Bedeutung dieses Spülvorgangs tritt insbesondere dann in den Vordergrund, wenn die Anordnung von Abgaswärmetauschern im Rauchgastrakt einer Gasturbogruppe oder einer anderen Wärmekraftmaschine grosse Volumina bereitstellt, in denen sich entzündliche Gasgemische potenziell ansammeln können. Aus dem Stand der Technik ist beispielsweise bekannt, in Kombi-Kraftwerksanlagen vor der Inbetriebnahme der Gasturbogruppe die Gasturbogruppe mehrere Minuten ohne Feuerung anzutreiben, um damit eine Frischluft-Durchströmung des Abhitzedampferzeugers zu erzeugen. Erst wenn das Volumen des Abhizedampferzeugers beispielsweise fünfmal von der Gasturbogruppe gefördert wurde, erfolgt eine Zündung der Gasturbogruppe. Aufgrund des begrenzten maximalen Durchsatzes durch die Gasturbogruppe nimmt ein solcher Vorgang mehrere Minuten, typischerweise in einer Grössenordnung von 10 Minuten bis 20 Minuten, in Anspruch. Daraus resultiert, dass derartige Kraftwerksanlagen nur mit einer vergleichsweise langen Vorlaufzeit ab Stillstand Leistung ins Netz liefern können. Auch in Luftspeicheranlagen wird das gespeicherte Fluid in den meisten Fällen in einem Abgaswärmetauscher erhitzt, bevor es der Entspannungmaschine zugeführt wird. Das heisst, dass auch diese Anlagen, welche an sich zur Spitzenlastdeckung gedacht sind, und bei denen daher kurze Anfahrtszeiten wünschenswert sind, nur mit Verzögerung ans Netz gebracht werden können.

### Darstellung der Erfindung

Es ist nunmehr eine Aufgabe der vorliegenden Erfindung, hier Abhilfe zu schaffen. Die Erfindung soll ein Verfahren der eingangs genannten Art angeben, welches die Nachteile des Standes der Technik vermeidet. Insbesondere soll die Erfindung ein Verfahren der eingangs genannten Art so angeben, dass die durch den Spülvorgang verursachten Wartezeiten zur Inbetriebnahme einer Kraftwerksanlage drastisch verkürzt werden.

Diese Aufgabe wird mit dem im Anspruch 1 beschriebenen Verfahren gelöst. Der unabhängige Vorrichtungsanspruch gibt weiterhin eine zur Durchführung des erfindungsgemässen Verfahrens geeignete Kraftwerksanlage an.

Kern der Erfindung ist es also, die zur Durchführung des Spülvorgangs benötigte Luft nicht mittels der dem Rauchgas-Strömungsweg vorgeschalteten Kraftmaschine zu fördern oder diese Luft dem Rauchgas-Strömungsweg durch die Kraftmaschine zuzuführen, sondern die zur Durchführung des Spülvorgangs benötigte Luft unter Druck aus einem Speichervolumen zu entnehmen und im Wesentlichen unmittelbar, das heisst unter Umgehung von vorgeschalteten Kraftmaschinen, dem Rauchgas-Strömungsweg zuzuführen. Die Erfindung eignet sich ganz besonders zum Spülen von im Rauchgas-Strömungsweg angeordneten Abgaswärmetauschem, insbesondere von Abhitzedampferzeugern, welche beispielsweise der Frischdampferzeugung für den Dampfkreislauf einer Kombianlage oder zur Erzeugung von Prozessdampf oder Heizdampf dienen, oder von Luftvorwärmern, wie sie beispielsweise zur Wärmezufuhr zum Speicherfluid von Luftspeicheranlagen dienen.

Die Erfindung eignet sich besonders gut zur Anwendung in Luftspeicheranlagen, welche ein Speichervolumen aufweisen, welches mit komprimierter Luft gefüllt ist. Die Luft, welche zum Spülen des Rauchgas-Strömungswegs benötigt wird, kann in diesem Falle unmittelbar aus dem Speichervolumen der Druckspeicheranlage entnommen werden. Wenn bei einer einfachen Gasturbinenanlage oder einer Kombianlage ein solches Speichervolumen nicht vorhanden ist, kann mit Vorteil ein Speicherbehälter oberirdisch oder unterirdisch angeordnet werden, der mit einem Ladekompressor verbunden ist. Das Speichervolumen wird dann mit Vorteil so ausgelegt, dass dessen Normvolumen, das heisst, dessen Speicherkapazität bezogen auf den Umgebungsdruck, das 5- bis 30fache des zu spülenden Volumens beträgt. Als Ladekompressor kann dann beispielsweise ein Kolbenverdichter oder Schraubenverdichter Anwendung finden, der dieses Speichervolumen innerhalb einer Zeitspanne von beispielsweise einer Stunde auf den Nenndruck aufzuladen vermag.

In einer Ausführungsform des erfindungsgemässen Verfahrens wird die Luft unmittelbar stromauf eines Abgaswärmetauschers in den Rauchgas-Strömungsweg eingeleitet. In einer zweiten Ausführungsform des erfindungsgemässen Verfahrens wird bei einer Kraftwerksanlage, bei der stromab der Kraftmaschine und stromauf eines Abgaswärmetauschers eine Feuerungseinrichtung angeordnet ist, die Luft stromauf der Feuerungseinrichtung in den von der Kraftmaschine zur Feuerungseinrichtung führenden Strömungsweg eingeleitet.

In einer weiteren Ausführungsform des erfindungsgemässen Verfahrens wird während des Spülvorgangs die Kraftmaschine in Bewegung versetzt, also beispielsweise eine Turbine gedreht. Dadurch wird zusätzlich zu dem ersten Luftmassenstrom, welcher vom Druckspeicher entnommen und stromab der Kraftmaschine in den Strömungsweg eingeleitet wird, ein zweiter Luftmassenstrom durch den Rauchgas-Strömungsweg gefördert. Insbesondere dann, wenn die Kraftmaschine und die Speicherfluid-Entspannungsmaschine identisch sind, das heisst, wenn im stationären Betrieb der in der Entspannungsmaschine entspannte Speicherfluid-Massenstrom einem Abgaswärmetauscher auf der Primärseite zugeführt wird, wird während des Verfahrens ein zweiter Luftmassenstrom aus dem Speichervolumen in die Entspannungsmaschine geleitet.

Eine zur Durchführung des erfindungsgemässen Verfahrens geeignete Kraftwerksanlage umfasst eine Leitung mit einem Absperrorgan, welche von dem Druckspeicher zum Rauchgas-Strömungsweg und insbesondere zum primärseitigen Strömungsweg eines Abgaswärmetauschers führt. Im Rahmen der hier dargelegten Ausführungen wird in einem Wärmetauscher im Übrigen der Teil, der vom wärmeabgebenden Fluid durchströmt wird, als Primärseite bezeichnet. Entsprechend wird der Teil, der vom wärmeaufnehmenden Fluid durchströmt wird, als Sekundärseite bezeichnet. In einer Ausführungsform dieser Kraftwerksanlage führt ein Strömungsweg von dem Druckspeicher durch einen sekundärseitigen Strömungsweg des Abgaswärmetauschers und von dort zu einer Speicherfluid-Entspannungsmaschine. Der erste Luftmassenstrom, welcher zum Spülen des Abgaswärmetauschers entnommen wird, wird in dieser Ausführungsform bevorzugt stromauf des sekundärseitigen Strömungswegs des Abgaswärmetauschers abgezweigt.

In einer Ausführungsform der Kraftwerksanlage führt die Abströmung aus der Speicherfluid-Entspannungsmaschine zur Primärseite des Abgaswärmetauschers. Das heisst, die Speicherfluid-Entspannungsmaschine und die Kraftmaschine, welche stromauf des Abgaswärmetauschers angeordnet ist, können identisch sein. Eine solche Druckspeicheranlage ist beispielsweise aus der DE 102 58 594 bekannt, welche Schrift diesbezüglich einen integrierenden Bestandteil der vorliegenden Anmeldung darstellt. Aus dieser Schrift ist im Weiteren auch bekannt, im Strömungsweg des Speicherfluids eine Feuerungseinrichtung anzuordnen. Aus DE 44 10 440 ist weiterhin bekannt, einen Abgaswärmetauscher in der Abgasströmung einer Gasturbogruppe anzuordnen, und das Speicherfluid einer Druckspeicheranlage durch diesen Abgaswärmetauscher zu leiten, wo das Speicherfluid mit der Abgaswärme der Gasturbogruppe erwärmt wird. Es zeigt sich, dass die Erfindung auch hierbei gut einsetzbar ist.

### Kurze Beschreibung der Zeichnung

Die Erfindung wird nachfolgend anhand von in der Zeichnung illustrierten Ausführungsbeispielen näher erläutert. Im Einzelnen zeigen:

Figur 1 ein erstes Beispiel einer zur Durchführung des erfindungsgemässen Verfahrens geeigneten Kraftwerksanlage;

Figur 2 ein zweites Beispiel einer zur Durchführung des erfindungsgemässen Verfahrens geeigneten Kraftwerksanlage;

Figur 3 ein weiteres Beispiel einer zur Ausführung des erfindungsgemässen Verfahrens geeigneten Kraftwerksanlage; und

Figur 4 ein viertes Beispiel einer zur Ausführung des erfindungsgemässen Verfahrens geeigneten Kraftwerksanlage.

Die Ausführungsbeispiele dienen dem besseren Verständnis der Erfindung und sollen nicht zur Einschränkung der in den Ansprüchen gekennzeichneten Erfindung herangezogen werden.

### Wege zur Ausführung der Erfindung

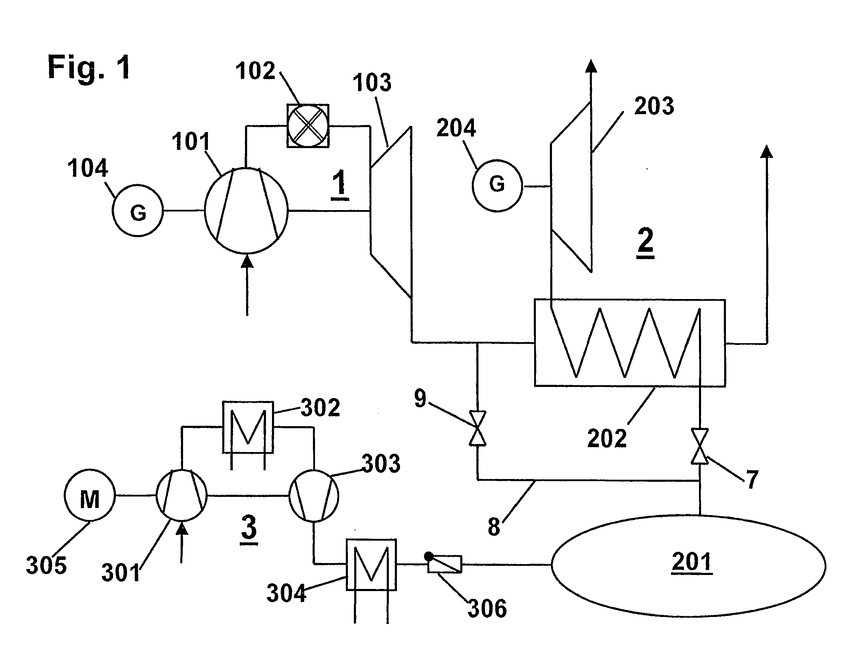

Die Figur 1 zeigt eine Kraftwerksanlage, wie sie prinzipiell aus der DE 44 10 440 beziehungsweise der korrespondierenden US 5,537,822 bekannt geworden ist. Eine Gasturbogruppe 1 umfasst einen Verdichter 101, eine Brennkammer 102, und eine Turbine 103. Die Bauart der Gasturbogruppe ist dabei nicht erfindungswesentlich; es könnte beispielsweise ohne weiteres eine mehrwellige Anordnung einer Gasturbogruppe Anwendung finden, oder auch eine Gasturbine mit sequenzieller Verbrennung, wie sie aus der EP 620 362 bekannt ist. Die Gasturbogruppe treibt einen Generator 104 zur Erzeugung einer elektrischen Nutzleistung an. Im Rauchgas-Strömungsweg der aus der Turbine 103 abströmenden entspannten Rauchgase ist ein Abgaswärmetauscher 202 angeordnet. Dieser wird auf seiner Primärseite von den heissen Rauchgasen durchströmt. Auf der Sekundärseite kann ein in einem Speichervolumen 201 unter Druck gespeichertes Fluid durch den Wärmetauscher 202 geleitet werden. Der Massenstrom des Speicherfluids wird von den Speicherfluid-Stellorgan 7 gesteuert. Das Speicherfluid durchströmt den Abgaswärmetauscher im Gegenstrom zum Rauchgas, und nimmt dabei Wärme aus den Rauchgasen auf. Das erwärmte Speicherfluid wird in der Speicherfluid-Entspannungsturbine 203 arbeitsleistend entspannt. Die Turbine 203 treibt den Generator 204 an, welcher ebenfalls eine elektrische Nutzleistung erzeugt. Das Speichervolumen 201, der Abgaswärmetauscher 202, die Turbine 203, sowie der Generator 204 bilden zusammen eine Druckspeicheranlage 2. Es ist prinzipiell möglich, und aus dem Stand der Technik auch bekannt, die Gasturbogruppe 1 und die Speicherfluid-Entspannungsturbine 203 auf einem gemeinsamen Wellenstrang anzuordnen, wobei die Gasturbogruppe 1 und die Speicherfluid-Entspannungsmaschine 203 auf einen gemeinsamen Generator wirken. In Zeiten geringer Elektrizitätsnachfrage und entsprechend niedriger Strompreise wird die Verdichteranordnung 3 betrieben, um das Speichervolumen 201 mit Druckluft zu befüllen, welche in Zeiten hoher Elektrizitätsnachfrage und entsprechend hoher Strompreise wieder für die Elektrizitätserzeugung mittels der Turbine 203 und des Generators 204 zur Verfügung steht. Die Verdichteranordnung 3 umfasst einen ersten Verdichter 301, einen ersten Kühler 302, einen zweiten Verdichter 303, und einen zweiten Kühler 304, sowie weiterhin ein Rückschlagorgan 306 und einen Motor 305. Die Verdichter 301 und 303 sind gemeinsam mit dem Motor 305 auf einer gemeinsamen Welle angeordnet. Beim Betrieb der Verdichteranordnung 3 wird Luft vom Verdichter 301 angesaugt und verdichtet, im ersten Kühler 302 gekühlt, im zweiten Verdichter 303 weiterverdichtet, im zweiten Kühler 304 nochmals gekühlt, und über das Rückschlagorgan 306 zum Speichervolumen 201 gefördert. Das Rückschlagorgan 306 verhindert das Rückströmen von Fluid aus dem Speichervolumen 201 in den Verdichterstrang. Nach einem Anlagenstillstand muss die Primärseite des Abgaswärmetauschers 202 vor der Inbetriebnahme der Gasturbogruppe 1 gespült werden. Damit wird vermieden, dass sich brennbare Gase, welche sich potenziell in der Primärseite des Abgaswärmetauschers gesammelt haben, beim Zünden der Brennkammer 102 entzünden. Hierzu wird nach dem Stand der Technik die Gasturbogruppe 1 von dem motorisch betriebenen Generator 104 angetrieben, wodurch eine Strömung durch die Primärseite des Abgaswärmetauschers induziert wird. Der dabei zur Verfügung gestellte Frischluftmassenstrom ist begrenzt. Das Spülen des Abgaswärmetauschers nimmt daher mehrere Minuten in Anspruch. Die dargestellte Kraftwerksanlage kann in diesem Falle nur mit grosser Verzögerung Leistung ins Netz liefern. Bei der in der Figur 1 dargestellten Kraftwerksanlage zweigt daher eine Leitung 8 vom Strömungsweg des Speicherfluids ab, und mündet stromauf des Abgaswärmetauschers im Rauchgasströmungsweg der Gasturbogruppe 1. Zwischen der Turbine 103 der Gasturbogruppe 1 und dem Abgaswärmetauscher 202 kann auch eine Feuerungseinrichtung angeordnet sein; die Spülluftleitung 8 kann dann stromauf oder stromab der Feuerungseinrichtung im Rauchgasströmungsweg münden. Die Leitung kann durch ein Absperr-und/oder Stellorgan 9 verschlossen oder geöffnet werden. Erfindungsgemäss wird beim Start der Anlage das Absperrorgan 9 geöffnet. Bevorzugt wird gleichzeitig die Gasturbogruppe 1 vom elektromotorisch betriebenen Generator 104 angetrieben. Zusätzlich zu dem von der Gasturbogruppe geförderten Massenstrom strömt nunmehr Speicherfluid aus dem Speichervolumen 201 durch den Abgaswärmetauscher 202. Der nunmehr zum Spülen des Abgaswärmetauschers zur Verfügung stehende Frischluftmassenstrom beträgt ein Vielfaches dessen, der von der leer angetriebenen Gasturbogruppe bereitgestellt wird. Aus diesem Grunde wird die Zeit, die zum Spülen der Primärseite des Abgaswärmetauschers notwendig ist, wesentlich verkürzt, und die Kraftwerksanlage kann schneller Leistung in das Elektrizitätsnetz liefern. Nach dem Spülen der Primärseite des Abgaswärmetauschers 202 wird das Absperrorgan 9 wieder geschlossen. Der weitere Anfahrvorgang der Kraftwerksanlage wird dann auf eine dem Fachmann an sich bekannte Weise durchgeführt.

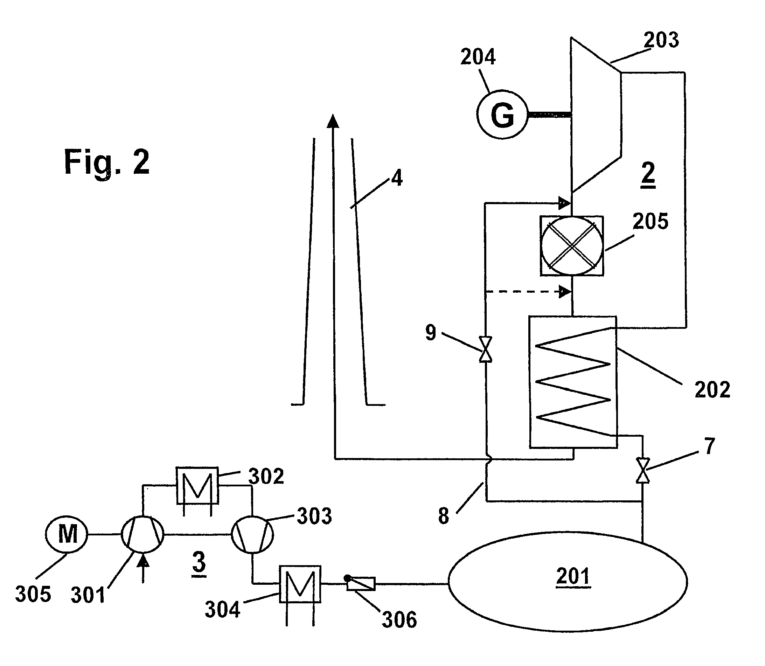

Bei der in Figur 2 dargestellten Kraftwerksanlage ist die Gasturbogruppe weggelassen. Im Speichervolumen 201 gespeicherte Druckluft strömt über das Stellorgan 7 in den sekundärseitigen Strömungsweg des Wärmetauschers 202 ein. Das Speicherfluid wird dort im Wärmetausch mit einem auf der Primärseite des Wärmetauschers strömenden Rauchgas erwärmt. Das erwärmte Speicherfluid strömt zur Speicherfluid-Entspannungsturbine 203, wo das Speicherfluid arbeitsleistend entspannt wird. Die dabei erzeugte Wellenleistung dient zum Antrieb des Generators 204. Das entspannte Speicherfluid strömt in eine Feuerungseinrichtung 205, und wird dort erwärmt. Das entstehende heisse Rauchgas strömt in die Primärseite des Abgaswärmetauschers 202 ein, und wird beim Durchströmen im Wärmetausch mit dem Speicherfluid abgekühlt, bevor es durch einen Kamin 4 in die Umgebung abströmt. Bei der im Ausführungsbeispiel dargestellten Kraftwerksanlage wird bei der Wiederinbetriebnahme nach einem Stillstand der Kraftwerksanlage zum notwendigen Spülen der Primärseite des Abgaswärmetauschers 202 einerseits bevorzugt das Stellorgan 7 um einen bestimmten Betrag geöffnet, wodurch Speicherfluid durch die Turbine 203 die Feuerungseinrichtung 205 und die Primärseite des Abgaswärmetauschers 202 durchströmt, und somit sicherstellt, dass dort keine brennbaren Gases mehr enthalten sind. Gleichzeitig wird das Absperrorgan 9 geöffnet, wodurch zusätzliches Speicherfluid über die Leitung 8 in den Strömungsweg stromab der Turbine 203 geleitet wird. Dieses wird bevorzugt stromauf der Feuerungseinrichtung eingeleitet, kann aber auch, wie durch die gestrichelte Linie dargestellt, unmittelbar stromauf der Primärseite des Abgaswärmetauschers 202 in den Rauchgas-Strömungsweg eingebracht werden. Das Einleiten der Spülluft stromauf der Feuerungseinrichtung 205 hat dabei den Vorteil, dass mit der dort eingeleiteten Luft bereits sehr frühzeitig im Anfahrvorgang die Feuerungseinrichtung in Betrieb genommen und der Abgaswärmetauscher 202 vorgeheizt werden kann, wodurch sich die Anfahrtzeiten weiter verkürzen lassen.

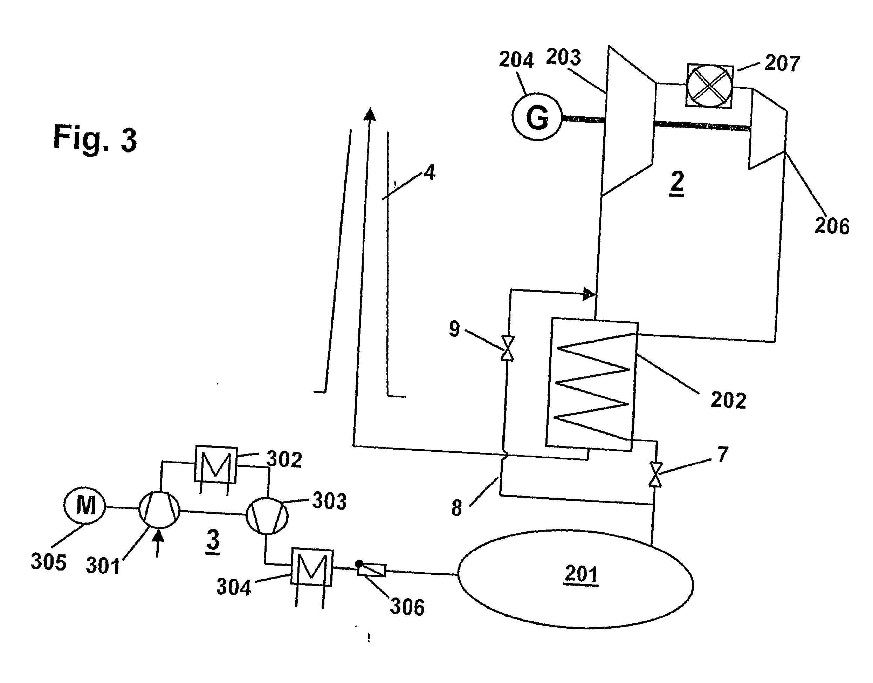

Das in der Figur 3 dargestellte Ausführungsbeispiel entspricht hinsichtlich der Durchführung des Spülvorgangs für die Primärseite des Abgaswärmetauschers 202 im Wesentlichen dem, was bereits im Zusammenhang mit der Figur 2 diskutiert wurde. Allerdings unterscheidet sich die hier dargestellte Kraftwerksanlage hinsichtlich der Speicherfluid-Entspannungsmaschine. Diese entspricht im Wesentlichen einer auch aus DE 102 58 594 bekannten Bauart. Speicherfluid durchströmt sekundärseitig den Abgaswärmetauscher 202, bevor es in einer ersten Turbine 206 teilentspannt wird. Das teilentspannte Speicherfluid strömt einer Brennkammer 207 zu, wo es durch die Verbrennung eines Brennstoffes erhitzt wird. Das entstehende Rauchgas wird in der Turbine 203 weiter entspannt, und durchströmt den Abgaswärmetauscher 202 primärseitig, im Gegenstrom zu dem Speicherfluid, wobei das Rauchgas im Wärmetausch mit dem sekundärseitig strömenden Speicherfluid abgekühlt wird. Selbstverständlich kann, wie in der DE 102 58 594 vorgeschlagen, zwischen der Turbine 203 und dem primärseitigen Strömungsweg des Abgaswärmetauschers 202 eine weitere Feuerungseinrichtung angeordnet sein. Die Einmündung des Spülfluids, welches über die Leitung 8 und das Absperrorgan 9 geführt wird, kann dann ebenfalls stromauf oder stromab der Feuerungseinrichtung erfolgen.

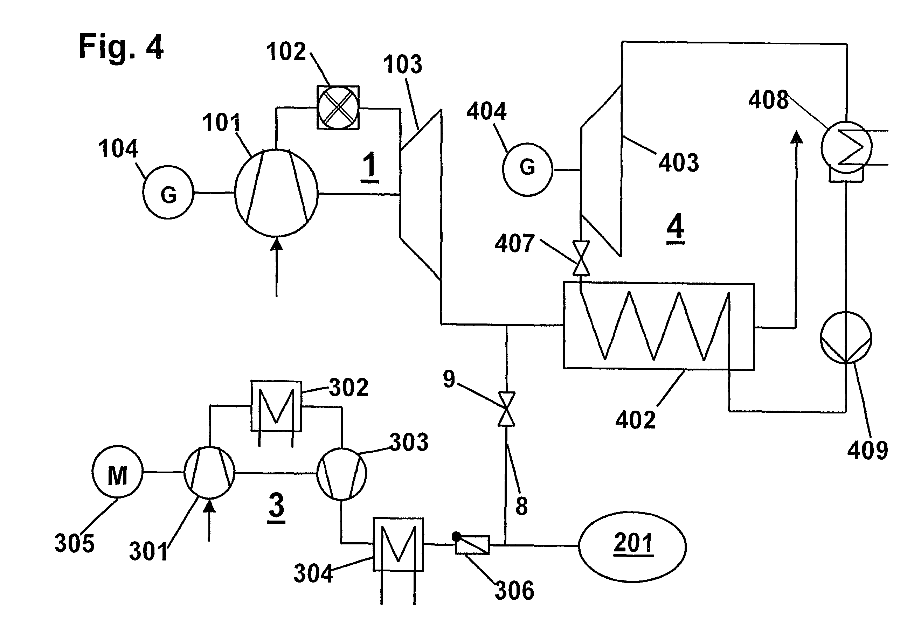

In der Figur 4 wird die Anwendung der Erfindung an einer Kombianlage erläutert. Die Kombianlage umfasst die Gasturbogruppe 1 und den Wasser-Dampfkreislauf 4. Der Wasser-Dampfkreislauf umfasst einen Abhitzedampferzeuger 402, welcher primärseitig vom Rauchgas der Gasturbogruppe 1 durchströmt wird. Eine Kesselspeisepumpe 409 fördert einen Speisewassermassenstrom durch die sekundärseitigen Strömungswege des Abhitzedampferzeugers 402. Aus diesem Speisewasser wird mittels der Abgaswärme der Gasturbogruppe Frischdampf erzeugt, welcher über ein Frischdampf-Stellorgan 407 einer Dampfturbine 403 zugeführt wird. In der Dampfturbine 403 wird der Dampf arbeitsleistend entspannt, und mit der so erzeugten Nutzleistung ein Generator 404 angetrieben. Es ist im Stand der Technik auch bekannt, die Dampfturbine 403 und die Gasturbogruppe 1 einwellig auszuführen, derart, dass sie auf einen gemeinsamen Generator wirken. Der entspannte Dampf wird in einem Kondensator 408 verflüssigt und das entstehende Kondensat wird wieder der Kesselspeisepumpe 409 zugeführt. Der Wasser-Dampfkreislauf ist hierbei stark vereinfacht dargestellt. Im Übrigen ist die Ausführungsform des Wasser-Dampfkreislauf nicht erfindungswesentlich. Der Dampf könnte ebenso für Prozess- oder Heizzwecke verwendet werden. Bei herkömmlichen Kombianlagen muss vor dem Start der Gasturbogruppe 1 der Abhitzedampferzeuger 402 gespült werden, indem die Gasturbogruppe 1 in Drehung versetzt und somit eine Durchströmung des Abhitzedampferzeugers induziert wird. Wie einleitend dargestellt, nimmt dieser Vorgang mehrere Minuten in Anspruch. Bei der dargestellten Kraftwerksanlage ist ein Luftspeicher 201 angeordnet, welcher von einer Verdichter-Anordnung 3 mit komprimierter Luft gefüllt wird. Erfindungsgemäss wird zum Spülen des primärseitigen Strömungsweg des Abhitzedampferzeuger 402 das Absperrorgan 9 geöffnet und Luft aus dem Speicher 201 durch die Leitung 8 in den Rauchgas-Strömungsweg der Gasturbogruppe eingebracht. Der hier erreichbare Spülluftmassenstrom ist wesentlich grösser als der Luftmassenstrom, der sich beim Drehen der Gasturbogruppe mit begrenzter Drehzahl erreichen lässt. Dadurch wird der Spülvorgang wesentlich schneller beendet. Das heisst, dass die Brennkammer 102 der Gasturbogruppe früher gezündet werden kann, womit die Kombianlage schneller ans Netz gebracht werden kann. Gegenüber den in den vorstehenden Figuren dargestellten Ausführungsbeispielen ist das Speichervolumen 201 wesentlich kleiner, weil die gespeicherte Luft nicht der Leistungserzeugung sondern dem Spülen des Abgastraktes der Gasturbogruppe 1 dient. Als Faustregel kann davon ausgegangen werden, dass zum Spülen des Abhitzedampferzeuger 402 dessen Volumen etwa fünfmal ersetzt werden soll. Daraus ergibt sich, dass die in dem Speichervolumen 201 gespeicherte Luftmasse grösser als der fünffache Inhalt des Dampferzeugers 402 sein soll. Bevorzugt werden Werte zwischen dem fünffachen und den 30fachen gewählt. Dies ermöglicht es, nach einem möglicherweise fehlgeschlagenen Startversuch den Abhitzedampferzeuger 402 ein zweites Mal mit in dem Speichervolumen 201 gespeicherter Luft zu spülen. Entsprechend können auch die Ladeverdichter 3 für verhältnismässig kleine Massenströme ausgelegt werden. Insbesondere können hier Kolbenverdichter oder Schraubenverdichter Anwendung finden.

Anhand der oben beschriebenen Ausführungsbeispiele und der Zeichnung eröffnen sich dem Fachmann auch von den Ausführungsbeispielen abweichende Ausführungsformen der Erfindung, welche im Umfang der Patentansprüche enthalten sind. Die Erfindung, wie sie in den Ansprüchen gekennzeichnet ist, eignet sich ebenfalls zum Spülen des Abgastraktes einer einfachen Gasturbogruppe.

### Bezugszeichenliste

- 1: Gasturbogruppe
- 2: Druckspeicheranlage
- 3: Verdichteranlage
- 4: Kamin
- 7: Speicherfluid-Stellorgan
- 8: Spülluftleitung
- 9: Absperrorgan
- 101: Verdichter
- 102: Bennkammer
- 103: Turbine
- 104: Generator
- 201: Druckspeicher, Speichervolumen
- 202: Wärmetauscher, Abgaswärmetauscher
- 203: Speicherfluid-Entspannungsmaschine
- 204: Generator
- 205: Feuerungseinrichtung
- 206: Speicherfluid-Entspannungsmaschine
- 207: Brennkammer
- 301: Verdichter
- 302: Kühler
- 303: Verdichter
- 304: Kühler
- 305: Motor
- 306: Rückschlagorgan
- 402: Abgaswärmetauscher, Abhitzedampferzeuger
- 403: Dampfturbine
- 404: Generator
- 407: Frischdampf-Stellorgan
- 408: Kondensator
- 409: Speisepumpe

## Patentansprüche

1. Verfahren zum Betrieb einer Kraftwerksanlage, welche Kraftwerksanlage umfasst: eine Kraftmaschine (1, 203) und einen stromab der Kraftmaschine sich anschliessenden Rauchgas-Strömungsweg, welches Verfahren umfasst, den Rauchgas-Strömungsweg mit Frischluft zu spülen, bevor der Rauchgas-Strömungsweg mit Rauchgas beaufschlagt wird, **gekennzeichnet dadurch**, zur Durchführung des Spülvorgangs Luft aus einem Druckspeicher (201) zu entnehmen und die Luft stromab der Kraftmaschine in den Rauchgas-Strömungsweg einzuleiten.

2. Verfahren gemäss Anspruch 1, wobei im Rauchgas-Strömungsweg die wärmeabgebende Primärseite eines Abgaswärmetauschers (202, 402) angeordnet ist.

3. Verfahren gemäss Anspruch 2, wobei der Abgaswärmetauscher ein Abhitzedampferzeuger (402) ist.

4. Verfahren gemäss einem der vorstehenden Ansprüche, wobei der Druckspeicher der Druckspeicher einer Druckspeicheranlage (2) mit einer Speicherfluid-Entspannungsmaschine (203, 206) ist.

5. Verfahren gemäss Anspruch 4, wobei die Kraftmaschine und die Speicherfluid-Entspannungsmaschine identisch sind, **gekennzeichnet dadurch**, während des Spülvorgangs einen zweiten Luftmassenstrom aus dem Speichervolumen in die Entspannungsmaschine zu leiten.

6. Verfahren gemäss einem der Ansprüche 4 oder 5, wobei ein sekundärseitiger Strömungsweg des Abgaswärmetauschers (202) vom Druckspeicher (201) zur Speicherfluid-Entspannungsmaschine (203, 206) führt, umfassend, die Luft stromauf des sekundärseitigen Strömungswegs des Abgaswärmetauschers abzuzweigen.

7. Verfahren gemäss einem der Ansprüche 2 bis 6, umfassend, die Luft unmittelbar stromauf des Abgaswärmetauschers in den Rauchgas-Strömungsweg einzuleiten.

8. Verfahren gemäss einem der Ansprüche 2 bis 7, wobei stromab der Kraftmaschine (1, 203) und stromauf des Abgaswärmetauschers (202) eine Feuerungseinrichtung (205) angeordnet ist, **gekennzeichnet dadurch**, die Luft stromauf der Feuerungseinrichtung in den von der Kraftmaschine zu der Feuerungseinrichtung führenden Strömungsweg einzuleiten.

9. Verfahren gemäss einem der vorstehenden Ansprüche, **gekennzeichnet dadurch**, während des Spülvorgang die Kraftmaschine in Bewegung zu versetzen.

10. Kraftwerksanlage, umfassend wenigstens eine Kraftmaschine (1, 203), einen stromab der Kraftmaschine angeordneten Rauchgas-Strömungsweg, sowie einen Druckspeicher (201) zum Speichern von Frischluft zur Spülung des Rauchgasströmungswegs, **dadurch gekennzeichnet, dass** eine Leitung (8) mit einem Absperrorgan (9) von dem Druckspeicher zum Rauchgas-Strömungsweg führt und stromab der Kraftmaschine im Rauchgas-Strömungsweg mündet.

11. Kraftwerksanlage gemäss Anspruch 10, **dadurch gekennzeichnet, dass** in dem Rauchgas-Strömungsweg der wärmeabgebende, primärseitige Strömungsweg eines Abgaswärmetauschers (202, 402) angeordnet ist, und die Leitung (8) stromauf des Abgaswärmetauschers im Rauchgas-Strömungsweg mündet.

12. Kraftwerksanlage gemäss Anspruch 11, **dadurch gekennzeichnet, dass** der Abgaswärmetauscher ein Abhitzedampferzeuger (402) ist.

13. Kraftwerksanlage gemäss einem der Ansprüche 10 bis 12, umfassend eine Speicherfluid-Entspannungsmaschine (203, 206) und einen vom Druckspeicher zu der Speicherfluid-Entspannungsmaschine führenden Speicherfluid-Strömugsweg.

14. Kraftwerksanlage gemäss Anspruch 13, **dadurch gekennzeichnet, dass** der Speicherfluid-Strömungsweg durch einen wärmaufnehmenden sekundärseitigen Strömungsweg des Abgaswärmetauschers (202) und dann zur Speicherfluid-Entspannungsmaschine führt.

15. Kraftwerksanlage gemäss Anspruch 14, **dadurch gekennzeichnet, dass** die Abströmung aus der Speicherfluid-Entspannungsmaschine (203) zur Primärseite des Abgaswärmetauschers (202) führt.

16. Kraftwerksanlage gemäss einem der Ansprüche 11 bis 14, umfassend eine Gasturbogruppe (1), deren Rauchgasabströmung in der Primärseite des Abgaswärmetauschers mündet.

17. Kraftwerksanlage gemäss einem der Ansprüche 11 bis 16, **dadurch gekennzeichnet, dass** stromauf der Primärseite des Abgaswärmetauschers (202) eine Feuerungseinrichtung (205) angeordnet ist.

## Claims

1. Method for operating a power plant, which power plant comprises: an engine (1, 203) and a flue gas flow path following downstream of the engine, which method comprises scavenging the flue gas flow path with fresh air before the flue gas flow path is acted upon with flue gas, **characterized in that**, to carry out the scavenging operation, air is extracted from a pressure accumulator (201) and the air is introduced into the flue gas flow path downstream of the engine.

2. Method according to Claim 1, the heat-emitting primary side of an exhaust gas heat exchanger (202, 402) being arranged in the flue gas flow path.

3. Method according to Claim 2, the exhaust gas heat exchanger being a waste-heat recovery steam generator (402).

4. Method according to one of the preceding claims, the pressure accumulator being a pressure accumulator of a pressure accumulator plant (2) with an accumulator fluid expansion machine (203, 206).

5. Method according to Claim 4, the engine and the accumulator fluid expansion machine being identical, **characterized in that** a second air mass flow is conducted out of the accumulator volume into the expansion machine during the scavenging operation.

6. Method according to either one of Claims 4 and 5, a secondary-side flow path of the exhaust gas heat exchanger (202) leading from the pressure accumulator (201) to the accumulator fluid expansion machine (203, 206) comprising branching off the air upstream of the secondary-side flow path of the exhaust gas heat exchanger.

7. Method according to one of Claims 2 to 6, comprising introducing the air into the flue gas flow path directly upstream of the exhaust gas heat exchanger.

8. Method according to one of Claims 2 to 7, a firing device (205) being arranged downstream of the engine (1, 203) and upstream of the exhaust gas heat exchanger (202), **characterized in that** the air is introduced upstream of the firing device into the flow path leading from the engine to the firing device.

9. Method according to one of the preceding claims, **characterized in that** the engine is set in movement during the scavenging operation.

10. Power plant, comprising at least one engine (1, 203), a flue gas flow path arranged downstream of the engine and a pressure accumulator (201) for accumulating fresh air for scavenging the flue gas flow path, **characterized in that** a line (8) with a shut-off member (9) leads from the pressure accumulator to the flue gas flow path and issues into the flue gas flow path downstream of the engine.

11. Power plant according to Claim 10, **characterized in that** the heat-emitting primary-side flow path of an exhaust gas heat exchanger (202, 402) is arranged in the flue gas flow path, and the line (8) issues in the flue gas flow path upstream of the exhaust gas heat exchanger.

12. Power plant according to Claim 11, **characterized in that** the exhaust gas heat exchanger is a waste-heat recovery steam generator (402).

13. Power plant according to one of Claims 10 to 12, comprising an accumulator fluid expansion machine (203, 206) and an accumulator fluid flow path leading from the pressure accumulator to the accumulator fluid expansion machine.

14. Power plant according to Claim 13, **characterized in that** the accumulator fluid flow path leads through a heat-absorbing secondary-side flow path of the exhaust gas heat exchanger (202) and then to the accumulator fluid expansion machine.

15. Power plant according to Claim 14, **characterized in that** the outflow from the accumulator fluid expansion machine (203) leads to the primary side of the exhaust gas heat exchanger (202).

16. Power plant according to one of Claims 11 to 14, comprising a gas turbo group (1), the flue gas outflow of which issues in the primary side of the exhaust gas heat exchanger.

17. Power plant according to one of Claims 11 to 16, **characterized in that** a firing device (205) is arranged upstream of the primary side of the exhaust gas heat exchanger (202).

## Revendications

1. Procédé d'exploitation d'une centrale électrique, laquelle centrale électrique comprend une machine motrice (1, 203) et un parcours d'écoulement des gaz de fumée raccordé en aval de la machine motrice, lequel procédé comprend les étapes qui consistent à injecter de l'air frais, dans le parcours d'écoulement des gaz de fumée avant que les gaz de fumée soient injectés dans le parcours d'échappement des gaz de fumée, **caractérisé en ce que** pour réaliser l'opération d'injection d'air, l'air est prélevé dans une réserve sous pression (201) et l'air est injecté dans le parcours d'écoulement des gaz d'échappement en aval de la machine motrice.

2. Procédé selon la revendication 1, dans lequel le côté primaire, qui délivre de la chaleur, d'un échangeur de chaleur des gaz d'échappement (202, 402) est disposé dans le parcours d'écoulement des gaz d'échappement.

3. Procédé selon la revendication 2, dans lequel l'échangeur de chaleur des gaz d'échappement est une chaudière à récupération (402).

4. Procédé selon l'une des revendications précédentes, dans lequel la réserve sous pression est la réserve sous pression d'une installation (2) de réserve sous pression dotée d'une machine de détente (203, 206) du fluide accumulé.

5. Procédé selon la revendication 4, dans lequel la machine motrice et la machine de détente du fluide accumulé sont identiques, **caractérisé en ce que** pendant l'opération de purger d'air, un deuxième écoulement massique d'air est envoyé dans la machine de détente en provenance du volume d'accumulation.

6. Procédé selon l'une des revendications 4 ou 5, dans lequel un parcours d'écoulement du côté secondaire de l'échangeur de chaleur (202) des gaz d'échappement relie la réserve sous pression (201) à la machine de détente (203, 206) du fluide accumulé, le procédé comprenant l'étape qui consiste à prélever l'air en amont du parcours d'écoulement du côté secondaire de l'échangeur de chaleur des gaz d'échappement.

7. Procédé selon l'une des revendications 2 à 6, qui comprend l'étape qui consiste à introduire l'air dans le parcours d'écoulement des gaz de fumée immédiatement en amont de l'échangeur de chaleur des gaz d'échappement.

8. Procédé selon l'une des revendications 2 à 7, dans lequel un dispositif de combustion (205) est disposé en aval de la machine motrice (1, 203) et en amont de l'échangeur de chaleur (202) des gaz d'échappement, **caractérisé en ce que** l'air est introduit en amont du dispositif de combustion d'écoulement qui relie la machine motrice au dispositif de combustion.

9. Procédé selon l'une des revendications précédentes, **caractérisé en ce que** la machine motrice est mise en mouvement pendant l'opération d'injection d'air.

10. Installation de centrale électrique qui comprend au moins une machine motrice (1, 203), un parcours d'écoulement des gaz de fumée disposé en aval de la machine motrice, ainsi qu'une réserve sous pression (201) qui accumule de l'air frais destiné à être injecté dans le parcours d'écoulement des gaz d'échappement, **caractérisée en ce qu'**un conduit (8) doté d'un organe de fermeture (9) relie la réserve sous pression au parcours d'écoulement des gaz de fumée et débouche dans le parcours d'écoulement des gaz de fumée en aval de la machine motrice.

11. Installation de centrale électrique selon la revendication 10, **caractérisée en ce que** le parcours d'écoulement du côté primaire d'un échangeur de chaleur (202, 402) des gaz d'échappement qui délivre de la chaleur est disposé dans le parcours découlement des gaz d'échappement, le conduit (8) débouchant dans le parcours d'écoulement des gaz d'échappement en amont de l'échangeur de chaleur des gaz de fumée.

12. Installation de centrale électrique selon la revendication 11, **caractérisé en ce que** l'échangeur de chaleur des gaz d'échappement est une chaudière à récupération (402).

13. Installation de centrale électrique selon l'une des revendications 10 à 12, qui comprend une machine de détente (203, 206) du fluide accumulé et un parcours d'écoulement du fluide accumulé qui relie la réserve sous pression à la machine de détente du fluide accumulé.

14. Installation de centrale électrique selon la revendication 13, **caractérisée en ce que** le parcours d'écoulement du fluide accumulé passe par un parcours d'écoulement du côté secondaire de l'échangeur de chaleur (202) des gaz d'échappement qui reçoit de la chaleur et conduit ensuite à la machine de détente de fluide accumulé.

15. Installation de centrale électrique selon la revendication 14, **caractérisée en ce que** l'écoulement de sortie de la machine de détente (203) du fluide accumulé conduit au côté primaire de l'échangeur de chaleur (202) des gaz d'échappement.

16. Installation de centrale électrique selon l'une des revendications 11 à 14, qui comprend un groupe (1) à turbine à gaz dont l'évacuation des gaz de fumée débouche dans le côté primaire de l'échangeur de chaleur de gaz d'échappement.

17. Installation de centrale électrique selon l'une des revendications 11 à 16, **caractérisée en ce qu'**un dispositif de combustion (205) est disposé en amont du côté primaire de l'échangeur de chaleur (202) de gaz d'échappement.
